# EUROPÄISCHE PATENTSCHRIFT

(11) **EP 1 747 363 B1**
(45) Veröffentlichungstag und Bekanntmachung des Hinweises auf die Patenterteilung: **11.08.2010**
(21) Anmeldenummer: 05739833.1
(22) Anmeldetag: 10.05.2005
(51) Int. Cl.: F02B 19/12

(54) **HOCHVERDICHTENDER OTTOVERBRENNUNGSMOTOR MIT DROSSELREGELUNG; FREMDZÜNDUNG UND KRAFTSTOFFDIREKTEINSPRITZUNG IN EINE VORBRENNKAMMER**
HIGH-COMPRESSION SPARK-IGNITION ENGINE WITH THROTTLE CONTROL, EXTERNALLY SUPPLIED IGNITION, AND DIRECT FUEL INJECTION INTO A PRECOMBUSTION CHAMBER
MOTEUR A COMBUSTION INTERNE A ALLUMAGE COMMANDE, A COMPRESSION ELEVEE; A COMMANDE DES GAZ; A ALLUMAGE PAR APPAREILLAGE EXTERNE ET A INJECTION DIRECTE DU CARBURANT DANS UNE CHAMBRE DE PRECOMBUSTION

(30) Priorität: 12.05.2004 DE 102004023409
(43) Veröffentlichungstag der Anmeldung: 31.01.2007
(73) Patentinhaber: Schubert, Gottfried, 83139 Schwabering (DE)
(72) Erfinder: Schubert, Gottfried, 83139 Schwabering (DE)
(74) Vertreter: Gustorf, Gerhard
(86) Internationale Anmeldenummer: PCT/EP2005/052106
(87) Internationale Veröffentlichungsnummer: WO 2005/111393

(56) Entgegenhaltungen:
- DE-A- 2 930 670
- DE-B- 1 037 756
- US-A- 4 250 852
- US-A- 4 372 264
- US-A- 4 467 759
- US-A- 5 603 298
- US-B1- 6 343 585

## Beschreibung

Die Erfindung betrifft ein Verfahren zum Betrieb eines Ottoverbrennungsmotors nach dem Oberbegriff des Patentanspruchs 1.

Aus DE 1 037 756 ist ein Einspritzmotor mit im Zylinderkopf ausgebildeter Wirbelkammer und Einspritzdüse bekannt, über die der Kraftstoff schon während des Verdichtungshubs in den Hauptbrennraum gespritzt wird. Somit ist hier das Problem der unkontrollierten Selbstzündung und der klopfenden Verbrennung durch den unverbrannten Kraftstoff im Hauptbrennraum nicht gelöst.

Die derzeit gebauten und angebotenen Ottoverbrennungsmotoren haben im Vergleich zum Dieselmotor eine relativ niedrige Verdichtung und deshalb einen höheren Kraftstoff-verbrauch, besonders im Teillastbetrieb. Der Dieselmotor dagegen benötigt wegen seines hohen Spitzendrucks eine relativ stärkere und schwerere Bauweise, läuft in der Regel lauter und rauher und erzeugt mehr Stickoxide, vor allem aber die gesundheitsschädlichen Rußpartikel.

Der höhere Teillastverbrauch des Ottoverbrennungsmotors wirkt sich hauptsächlich im Teillastbetrieb aus, was im Alltagsbetrieb deshalb sehr negativ ist, weil unsere Automobile wegen des dichten Straßenverkehrs fast nur noch im Teillastbereich betrieben werden können.

Zur Absenkung des Kraftstoffverbrauchs beim Ottoverbrennungsmotor wurden bisher verschiedene Maßnahmen bekannt: Verbesserung der Verbrennung durch Drall und Verwirbelung des Kraftstoffluftgemisches, Gemischabmagerung, Ladungsschichtung, Mehrfachzündung u.a.. Beim Dieselmotor suchte man Verbesserungen durch Kraftstoffdirekteinspritzung in Vor- und Nebenbrennkammern, gelenkten Einspritzstrahl u.v.a. mehr. Alle bekannt gewordenen Maßnahmen haben aber, besonders beim Ottoverbrennungsmotor, keine wesentliche Absenkung des Kraftstoffverbrauchs erbracht.

Um beim Ottoverbrennungsmotor den Kraftstoffverbrauch, vor allem im Teillastbereich, spürbar abzusenken, muß das Verdichtungsverhältnis wirksam angehoben werden, weil nur damit der thermische Wirkungsgrad spürbar ansteigt. Derzeitige Ottoverbrennungsmotoren arbeiten bekanntlich mit **konstruktiven** Verdichtungsverhältnissen von ca. ε = 10 : 1. Wird dieser Wert wesentlich überschritten, dann ergibt sich im Vollastbetrieb die Gefahr einer Selbstentzündung mit klingelnder oder gar klopfender Verbrennung, was bekanntlich einen drastischen Abfall von Drehmoment und Leistung, ja sogar eine Zerstörung des Verbrennungsmotors zur Folge haben kann. Dieselmotoren arbeiten mit **konstruktiven** Verdichtungsverhältnissen von ε = 18 bis 25 : 1 und dies auch im Teillastbereich, weil der Dieselmotor im Gegensatz zum Ottomotor in jedem Lastzustand fast die volle Zylinderfüllung verdichten muß, um die notwendige Selbstentzündungstemperatur zu erreichen. Damit arbeitet er, besonders im Teillastbetrieb, mit einem wesentlich höheren thermischen Wirkungsgrad als der Ottoverbrennungsmotor, der wegen seiner Drosselregelung nur jeweils eine Teilfüllung verdichtet und damit teilweise bei sehr niedrigen effektiven Verdichtungsverhältnissen von wenger als ε = 3 : 1 arbeitet. Bei Leerlauf etwa hat ein Ottoverbrennungsmotor nur eine Füllung von ca. 20 bis 25 Prozent.

Ein Nachteil des Dieselmotors ist dabei aber doch, daß er wegen der hohen Verdichtung fast der ganzen Zylinderfüllung auch hohe Verdichtungsarbeit leisten muß. In Fachkreisen ist deshalb bekannt, daß ein Ottoverbrennungsmotor, der im Teillastbereich mit ähnlich hohen Verdichtungsverhältnissen wie ein Dieselmotor betrieben würde, letzterem wegen der geringeren Verdichtungsarbeit überlegen wäre.

Der Erfindung liegt die Aufgabe zugrunde, ein Verfahren zum Betrieb eines Ottoverbrennungsmotors zur Verfügung zu stellen, bei dem es auch bei einem hohen effektiven Verdichtungsverhältnis nicht zu einer klopfenden Verbrennung kommt.

Die Lösung dieser Aufgabe ergibt sich aus den Merkmalen des Patentanspruchs 1. Vorteilhafte Weiterbildungen sind Gegenstand der Unteransprüche.

In der Zeichnung sind Ausführungsbeispiele der Erfindung dargestellt. Es zeigen:
Figur 1 einen Zylinder eines erfindungsgemäßen Hubkolbenmotors,
Figur 2 einen erfindungsgemäßen Kreiskolbenmotor und
Figuren 3 und 4 einen Zylinder eines Hubkolbenmotors nach Anspruch 6 in Auf- und Grundriss, bei welchem die Vorbrennkammer zwischen Einlaßventil und Hauptbrennraum angeordnet ist.

Die eingetragenen Ziffern bezeichnen in allen Figuren gleiche Teile, und zwar:
- 1: den Kolben,
- 2: die Zylinderwandung bzw. Trochoide,
- 3: den Zylinderkopf,
- 4: das Auslaßventil,
- 5: die Vorbrennkammer,
- 6: den Überströmkanal,
- 7: die Haupteinspritzdüse,
- 8: die Zündkerze,

- 9: die zweite Einspritzdüse,
- 10: den Einlaßkanal,
- 11: den Auslaßkanal,
- 12: das Einlaßventil,
- 13: die Zwischenwand im Überströmkanal eines Kreiskolbenmotors,
- 14: die umlaufende Wulst,
- 15: den Hauptbrennraum,
- 16: den Zünd-OT,
- 17: den Überschneidungs-OT beim Kreiskolbenmotor.

Das nachfolgend beschriebene, erfindungsgemäße Verbrennungsverfahren für Ottoverbrennungsmotoren soll die Vorteile des Ottoverbrennungsverfahrens mit denen des Dieselmotors (hohe Verdichtung) verbinden und doch die Gefahr einer Selbstentzündung beherrschen. Der Ottoverbrennungsmotor habe dafür ein konstruktives Verdichtungsverhältnis von ε = 15 bis 25 : 1 und erreicht damit im Teillastbereich einen entsprechend niedrigen Kraftstoffverbrauch. Um das zu ermöglichen, hat der Ottoverbrennungsmotor außerhalb des Hauptbrennraumes 15, das ist der Raum zwischen Kolbenboden und Zylinderkopf 3 beim Hubkolbenmotor, eine im Zylinderkopf 3 angeordnete und mit dem Hauptbrennraum 15 durch einen Überströmkanal 6 verbundene Vorbrennkammer 5, in die der Kraftstoff während des Verdichtungshubes direkt eingespritzt und von einer ebenfalls in dieser Vorbrennkammer 5 angeordneten Zündkerze 8 entzündet wird. Diese Vorbrennkammer 5 ist möglichst kompakt - kugel- oder halbkugelförmig - ausgebildet, damit Brennweg und Durchbrennzeit möglichst kurz werden; aus demselben Grund ist die Zündkerze 8 möglichst mittig angeordnet. Da diese Vorbrennkammer 5 trotz guter Kühlung im Betrieb relativ heiß wird, soll der eingespritzte Kraftstoffstrahl, an der Innenwand der Vorbrennkammer 5 entlang gleitend, diese kühlen und dabei den Kraftstoff verdampfen und dann zum optimalen Zeitpunkt, relativ nahe beim oberen Totpunkt (OT) entzündet zu werden. Die Verbrennung läuft wegen der kurzen Brennwege sehr schnell ab, was eine weitgehend vollständige Verbrennung bei hohem thermischen Wirkungsgrad ergibt. In dieser Ausführung kann der Ottoverbrennungsmotor nur als sogenannter Drosselmotor betrieben werden; dafür muß die Öffnung der Drosselklappe so weit begrenzt werden, daß noch keine Selbstentzündung erfolgen kann. Man verschenkt damit zunächst hohe Spitzenwerte an Drehmoment und Leistung, bekommt dafür aber einen sehr sparsamen Drosselmotor, der in Leistung und Drehmoment dem des Ausgangsmotors mit einer Verdichtung von ε = 10 : 1 durchaus ebenbürtig ist, weil der erfindungsgemäße Ottoverbrennungsmotor mit einem viel höheren Verdichtungsverhältnis arbeitet.

Um beim erfindungsgemäßen Verfahren zum Betrieb des Ottoverbrennungsmotors einen echten Vollastbetrieb zu ermöglichen, wird folgende Einspritzsteuerung angeordnet: Schon ab oberem Teillastbereich, wenn also die Gefahr einer Selbstentzündung zu befürchten ist, wird in die Vorbrennkammer 5 nur ein Teil (ca. zwei Drittel) des für die volle Verbrennung benötigten Kraftstoffes eingespritzt, wodurch das damit entstehende Kraftstoffluftgemisch (Benzin-Luftgemisch) zunächst nicht zündfähig ist. Bekanntlich ist ein Kraftstoffluftgemisch bei Verwendung von Benzin als Kraftstoff nur in relativ engen Mischungsverhältnissen überhaupt zündfähig, und zwar etwa im Bereich von λ = 0,5 bis 1,2; dabei entspricht ein λ = 1, 0 dem stöchiometrischen Luft-Kraftstoffverhältnis. Um das in der Vorbrennkammer 5 vorgemischte Kraftstoffluftgemisch zündfähig zu bekommen, spritzt man kurz vor dem aus dem Teillastbereich bekannten, optimalen Zündzeitpunkt den Rest des benötigten Kraftstoffes (ca. ein Drittel) nach und erreicht so die Zündfähigkeit. Diese Nachspritzung kann aus ein und derselben Einspritzdüse 7 erfolgen. Sie kann aber auch aus einer zweiten Einspritzdüse 9 so erfolgen, daß der zweite Kraftstoffstrahl in Richtung der Überströmkanalachse verläuft und so die Flamme besser in den Hauptbrennraum 15 getragen wird. Die eigentliche Verbrennung in der Vorbrennkammer 5 verläuft so schnell, daß dort eine klopfende Verbrennung kaum entstehen kann, zumal die von der Zündung ausgehende Druckwelle sich über den Überströmkanal 6 zunächst entspannen kann; im Hauptbrennraum 15 selbst kann keine Selbstentzündung entstehen, weil sich dort nur verdichtete **Luft ohne Kraftstoff** befindet.

Damit kann man auch einen echten Vollastbetrieb des Ottoverbrennungsmotors beherrschen. Allerdings wird ein derartiger Ottoverbrennungsmotor wegen seines hohen Verdichtungsverhältnisses relativ hohe Werte in Drehmoment und Leistung erreichen und deshalb eine mechanische Verstärkung benötigen.

In der zuletzt beschriebenen Ausführung ist der Ottoverbrennungsmotor ein Hochleistungsmotor mit sehr niedrigem Teillastverbrauch. Dabei wirkt die Restluft im Hauptbrennraum 15 wie eine Nachverbrennung, weshalb sich ein eigener Katalysator erübrigen dürfte.

Um auch noch die letzten Leistungsreserven aus dem Ottoverbrennungsmotor herauszuholen, kann man die im Hauptbrennraum 15 noch vorhandene Restluft mit einer Kraftstoffeinspritzung versehen und durch eine zweite Zündkerze entzünden. Dann aber benötigt man wieder einen eigenen Katalysator zur Erreichung ausreichender Abgaswerte.

Um die Verbrennung im Ottoverbrennungsmotor noch effektiver zu machen, kann man durch eine Lufteinblasung in die Vorbrennkammer 5 gegen Ende des Auslaßhubes die Vorbrennkammer 5 vom restlichen Abgas reinigen und mit Frischluft füllen.

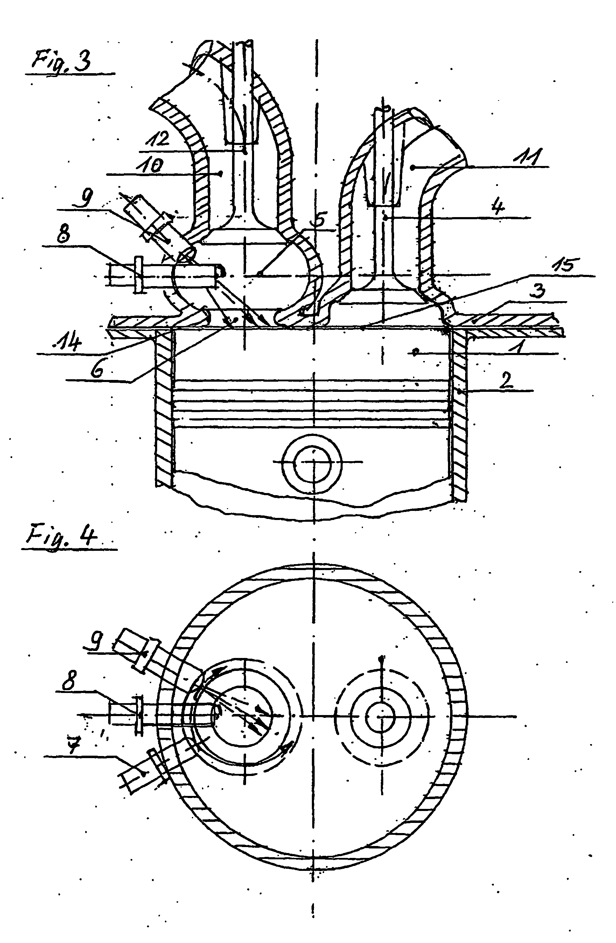

Eine relativ einfache Variante des Verfahrens zum Betrieb des Ottoverbrennungsmotors könnte so aussehen, daß gemäß Fig. 3 und 4 die Vorbrennkammer 5 zwischen Einlaßventil 12. und Hauptbrennraum 15 angeordnet wird und von letzterem durch eine umlaufende Wulst 14 soweit abgetrennt wird, daß kein unverbrannter Kraftstoff in den Hauptbrennraum 15 gelangt. In dieser Version wird die Vorbrennkammer 5 während des Ansaugtaktes automatisch mit Frischluft gespült und befüllt.

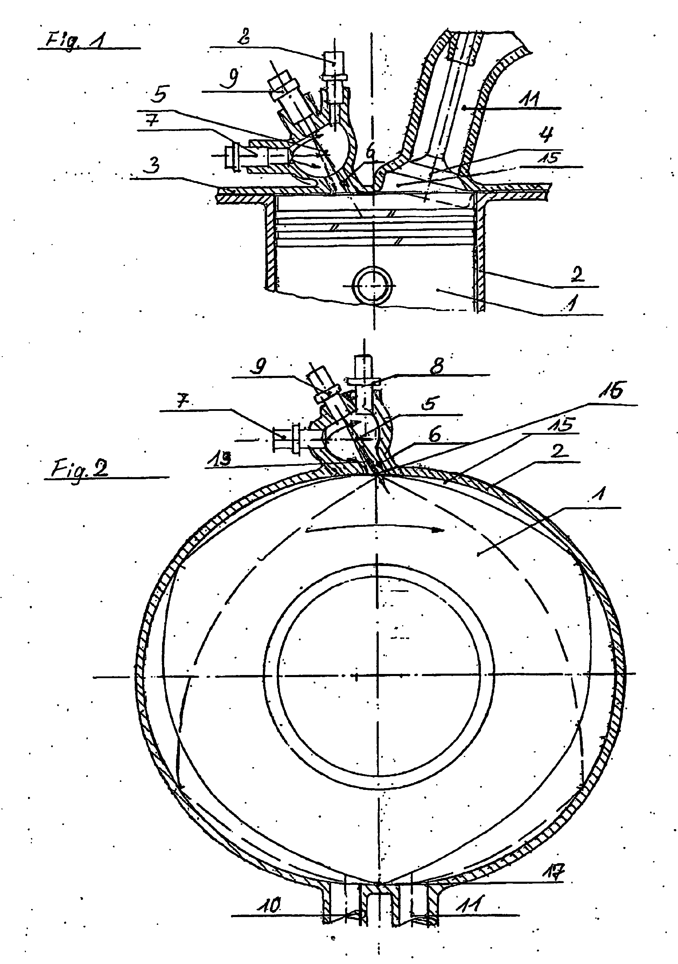

Besonders geeignet für das vorstehend beschriebene, erfindungsgemäße Verbrennungsverfahren ist der Wankel-Kreiskolbenmotor (Figur 2), weil er bekanntlich für drei Kolben in einer Scheibe nur einen Verbrennungsraum benötigt. Von diesem Kreiskolbenmotor waren bisher bekannt: sein überhöhter Kraftstoffverbrauch, seine schlechte Laufkultur (Zweitaktern im unteren Teillastbereich) und seine viel zu hohen Abgastemperaturen. All diese Nachteile werden durch das erfindungsgemäße Verbrennungsverfahren überwunden: Durch die kompakte Vorbrennkammer 5, welche sich hier außerhalb der sogenannten Trochoide befindet und mit dem Hauptbrennraum 15 durch den Überströmkanal 6 verbunden ist, wird die Verbrennung wesentlich verbessert; Kraftstoffverluste über die sog. Leckgase entfallen, weil in den Hauptbrennraum 15 kein unverbrannter Kraftstoff gelangt. Die Leckgase enthalten nur Luft oder bereits verbrannte Abgase. Wegen der Vorbrennkammer 5 entfallen auch die bisher notwendigen Brennmulden in den Kolbenoberflächen; damit entfallen im sogenannten Überschneidungs-OT, auch beim günstigeren Umfangs- Ein- und Auslaß, die bisher üblichen Kurzschlußverluste. Der Überströmkanal 6 mündet dabei an der Trochoide im Bereich des Zünd-OT oder in Drehrichtung später, um die Vorbrennkammer 5 besser zu spülen; dies wird weiter verbessert, wenn der Überströmkanal 6 eine in Überströmkanalachse verlaufende, quer zur Drehrichtung angeordnete Zwischenwandung 13 erhält: Dann nämlich drückt der Überdruck im nacheilenden Kolbenbrennraum zunächst Luft in die Vorbrennkammer 5, treibt dabei das Abgas in den vorauseilenden Kolbenbrennraum und füllt dann erst die Vorbrennkammer 5 mit Frischluft während des weiteren Verdichtungshubes. Auch hier könnte man die Spülung durch eine eigene Frischlufteinblasung verbessern. All diese Maßnahmen ergeben einen sauberen Gaswechsel, damit einen runden Motorlauf, einen niedrigeren Kraftstoffverbrauch und normale Abgastemperaturen.

## Patentansprüche

1. Verfahren zum Betrieb eines Ottoverbrennungsmotor mit hohem konstruktiven Verdichtungsverhältnis von ε größer 15 : 1, mit einer Drosselregelung, die eine unkontrollierte Selbstzündung vermeidet, mit Fremdzündung mittels Zündkerze (8) und mit Kraftstoffdirekteinspritzung von einer Einspritzdüse (7) in eine Vorbrennkammer (5), die durch einen Überströmkanal (6) mit dem Hauptbrennraum (15) verbunden ist, wobei der Kraftstoff während des Verdichtungshubs in die Vorbrennkammer (5) eingespritzt und durch die dort möglichst zentral angeordnete Zündkerze (8) entzündet wird, **dadurch gekennzeichnet, dass** im oberen Teillast- und Volllastbereich zunächst nur ein erster Teil der Einspritzmenge des für die volle Verbrennung notwendigen Kraftstoffes durch die Einspritzdüse (7) i.w. rechtwinklig zur Achse des Überströmkanals (6) gegen die Innenseite der Vorbrennkammer (5) so eingespritzt wird, dass dieser an der Innenwand entlang gleitet, während ein zweiter, kleinerer Teil der Einspritzmenge erst kurz vor dem optimalen Zündzeitpunkt nachgespritzt wird.

2. Verfahren nach Anspruch 1, **dadurch gekennzeichnet, dass** der erste Teil des eingespritzten Kraftstoffs etwa 2/3 und der zweite Teil etwa 1/3 der Kraftstoffmenge beträgt.

3. Verfahren nach Anspruch 2, **dadurch gekennzeichnet, dass** der zweite, kleinere Teil der Kraftstoffmenge über eine zweite Einspritzdüse (9) eingespritzt wird, deren Strahl in Achsrichtung des Überströmkanals (6) verläuft.

4. Verfahren nach einem der vorhergehenden Ansprüche, **dadurch gekennzeichnet, dass** in die Vorbrennkammer (5) gegen Ende des Auslasshubes zusätzlich Frischluft eingeblasen wird.

5. Verfahren nach einem der vorhergehenden Ansprüche, **dadurch gekennzeichnet, dass** die Vorbrennkammer (5) zwischen Einlassventil (12) und Hauptbrennraum (15) angeordnet und vom Hauptbrennraum (15) durch eine umlaufende Wulst (14) teilweise abgetrennt ist.

6. Verfahren nach einem der vorhergehenden Ansprüche, **dadurch gekennzeichnet, dass** eine zusätzliche Kraftstoffmenge in den Hauptbrennraum (15) eingespritzt und dort von einer zweiten Zündkerze entzündet wird.

7. Verfahren nach einem der vorhergehenden Ansprüche, **gekennzeichnet durch** die Ausbildung als Kreiskolbenmotor mit einem Kolben (1) ohne Brennmulde, wobei die Vorbrennkammer (5) außerhalb der Trochoide angeordnet und mit dem Hauptbrennraum (15) durch den Überströmkanal (6) verbunden ist, der an der Trochoide im Bereich des Zünd-OT (16) oder in Drehrichtung später mündet.

8. Verfahren nach Anspruch 7, **dadurch gekennzeichnet, dass** sich im Überströmkanal (6) des Kreiskolbenmotors eine in der Achse des Überströmkanals (6) verlaufende, quer zur Drehrichtung angeordnete Zwischenwand (13) befindet.

## Claims

1. Process for the operation of a spark-ignition engine having a high constructional compression ratio of ε more than 15:1, a throttle control avoiding uncontrolled auto-ignition, externally supplied ignition by means of a sparking plug (8) and a direct fuel injection from an injection nozzle (7) into a precombustion chamber (5) which is connected through a transfer port (6) with the main combustion chamber (15), wherein the fuel is injected during the compression stroke into the precombustion chamber (5) and is inflamed by said sparking plug (8) located as near as possible in the centre of said precombustion chamber (5), **characterized in that** in the upper full load and part load mode firstly only part of the fuel quantity necessary for the full combustion is injected through said nozzle (7) substantially orthogonally to the axis of said transfer port (6) and towards the inner surface of the precombustion chamber (5) such that said fuel is sliding on said inner surface, whereas a second and smaller part of said fuel quantity is injected shortly before the optimum ignition point.

2. Process according to claim 1, **characterized in that** said first part of the injected fuel corresponds to approximately 2/3 and said second part to approximately 1/3 of the fuel quantity.

3. Process according to claim 2, **characterized in that** said second, smaller part of the fuel quantity is injected through a second injection nozzle (9) the jet of which is extending in the direction of the axis of said transfer port (6).

4. Process according to any of the preceding claims, **characterized in that** towards the end of the exhaust stroke fresh air is blown into the precombustion chamber (5).

5. Process according to any of the preceding claims, **characterized in that** the precombustion chamber (5) is positioned between the inlet valve (12) and the main combustion chamber (15) against which it is partially shielded by a circumferential collar (14).

6. Process according to any of the preceding claims, **characterized in that** an additional amount of fuel is injected into the main combustion chamber (15) where it is inflamed by a second sparking plug.

7. Process according to any of the preceding claims, **characterized by** a planetary piston engine having a rotary piston (1) without combustion cavity, wherein the precombustion chamber (5) is positioned outside of the trochoid and connected with the main combustion chamber (15) through the transfer port (6) leading against the trochoide in the area of the upper dead ignition point (16) or later in the sense of rotation.

8. Process according to claim 7, **characterized in that** inside of the transfer port (6) a partition wall (13) is provided extending along the axis of said transfer port (6) and transversally to the sense of rotation.

## Revendications

1. Procédé pour le fonctionnement d'un moteur Otto à fort taux constructif de compression ε > 15:1, avec réglage par étranglement apte à éviter l'auto-allumage incontrôlé, avec allumage commandé au moyen de bougies (8) et avec injection directe du carburant par buse d'injection (7) dans une chambre de précombustion (5) reliée à la chambre principale de combustion (15) à travers un canal de transfert (6), le carburant étant injecté durant la course de compression dans la chambre de précombustion (5) où il est enflammé par la bougie (8) positionnée si possible au centre, **caractérisé par le fait que** dans la section supérieure de charge partielle et de pleine charge, une première quantité de carburant nécessaire à la combustion totale est d'abord injectée par la buse d'injection (7) sous un angle sensiblement perpendiculaire à l'axe du canal de transfert (6) contre la paroi interne de la chambre de précombustion (5) de manière à ce qu'elle balaie la paroi interne, tandis qu'une deuxième partie plus petite de la quantité de carburant est injectée juste avant le point optimal d'allumage.

2. Procédé selon la revendication 1 **caractérisé par le fait que** la première partie du carburant injecté correspond à environ 2/3 et la seconde partie à environ 1/3 de la quantité de carburant.

3. Procédé selon la revendication 2 **caractérisé par le fait que** la seconde partie plus petite du carburant est injectée par une seconde buse d'injection (9) en direction axiale par rapport au canal de transfert (6)

4. Procédé selon une des revendications précédentes **caractérisé par le fait que**, vers la fin de la course d'expulsion, de l'air frais est aussi injecté dans la chambre de précombustion (5).

5. Procédé selon une des revendications précédentes **caractérisé par le fait que** la chambre de précombustion (5) est positionnée entre la soupape d'admission (12) et la chambre principale de combustion (15) et partiellement séparée de la chambre principale de combustion (15) par un rebord en bourrelet (14).

6. Procédé selon une des revendications précédentes **caractérisé par le fait qu'**une quantité supplémentaire de carburant est injecté dans la chambre principale de combustion (15) où elle est enflammée par une seconde bougie.

7. Procédé selon une des revendications précédentes **caractérisé par** une construction de moteur à piston rotatif (1) non muni d'une cavité de combustion, la chambre de précombustion (5) étant positionnée hors de la trochoïde et reliée à la chambre principale de combustion (15) à travers le canal de transfert (6) qui aboutit dans la trochoïde dans la zone de point mort haut d'allumage (16) ou plus tard dans le sens de rotation.

8. Procédé selon la revendication 7 **caractérisé par le fait que** le canal de transfert (6) du moteur à piston rotatif est muni d'une paroi intermédiaire (13) positionnée dans l'axe dudit canal (6) transversalement au sens de rotation.
